# EUROPEAN PATENT SPECIFICATION

(11) **EP 4 393 636 B1**
(45) Date of publication and mention of the grant of the patent: **01.04.2026**
(21) Application number: 22918013.8
(22) Date of filing: 25.02.2022
(51) Int. Cl.: B23K 35/30, B23K 35/40, B23K 35/02, C22C 38/02, C22C 38/04, C22C 38/12, C22C 38/22, C22C 38/38, C22C 38/44, C22C 38/58

(54) **GAS SHIELDED ARC WELDING WIRE, STEEL WIRE ROD FOR GAS SHIELDED ARC WELDING WIRE AND PRODUCTION METHOD THEREOF**
GASABGESCHIRMTER LICHTBOGENSCHWEISSDRAHT, STAHLDRAHTSTAB FÜR GASABGESCHIRMTEN LICHTBOGENSCHWEISSDRAHT UND HERSTELLUNGSVERFAHREN DAFÜR
FIL DE SOUDAGE À L'ARC SOUS PROTECTION GAZEUSE, FIL-MACHINE EN ACIER POUR FIL DE SOUDAGE À L'ARC SOUS PROTECTION GAZEUSE ET SON PROCÉDÉ DE PRODUCTION

(30) Priority: 06.01.2022 CN 202210009859
(43) Date of publication of application: 03.07.2024
(73) Proprietor: Zhangjiagang Rongsheng Special Steel Co. Ltd., Suzhou, Jiangsu 215625 (CN); Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN)
(72) Inventor: ZHANG, Yu, Suzhou, Jiangsu 215625 (CN); TANG, Yao, Suzhou, Jiangsu 215625 (CN); WANG, Na, Suzhou, Jiangsu 215625 (CN); ZHAO, Fu, Suzhou, Jiangsu 215625 (CN)
(74) Representative: Gille Hrabal Partnerschaftsgesellschaft mbB Patentanwälte
(86) International application number: PCT/CN2022/078016
(87) International publication number: WO 2023/130546

(56) References cited:
- CN-A- 101 288 925
- CN-A- 102 294 554
- CN-A- 102 294 554
- CN-A- 110 788 513
- CN-A- 111 424 210
- CN-A- 111 424 210
- CN-A- 112 222 572
- CN-A- 112 917 043
- JP-A- 2000 336 456

## Description

### TECHNICAL FIELD

The present invention belongs to the technical field of welding materials, and relates to a welding wire for gas shielded arc welding, and a steel wire rod for the preparation of a welding wire for gas shielded arc welding and a production method therefor.

### BACKGROUND

Steel is most widely used among metal materials, and is usually connected in a manner of welding. Gas shielded arc welding is a commonly used welding method.

In welding, the quality of welded joints determines the welding performance. The mechanical property and the forming property of the welded joints are important indexes for evaluating the quality of the welded joints, and the performance of welding wires is one important factor affecting the two properties.

When welding wires currently on the market are used for welding, especially during all-position welding on a pipeline and the like, the problem that weld metal at a position corresponding to the position of twelve o'clock, that is, at a position directly above a welded seam, flows downwards and falls often occurs, and consequently the forming property is poor and a weld bead is uneven.

### SUMMARY

Document CN201911031250 discloses a production method for improving the wire feed stability of welding wire steel.

In view of the defects in the prior art, the present invention aims to provide a welding wire for gas shielded arc welding, and a steel wire rod of a welding wire for gas shielded arc welding and a production method therefor, so as to solve the problems that during all-position welding, weld metal at a position corresponding to the position of twelve o'clock flows downwards and falls, and consequently the forming property is poor and a weld bead is uneven.

In order to realize the above-described objective of the present invention, the present invention provides a steel wire rod for the preparation of a welding wire for gas shielded arc welding, chemical components of which include, in mass percentage, 0.03%-0.08% of C, 0.5%-1.0% of Si, 1.4%-1.8% of Mn, 0.013%-0.1% of S, less than or equal to 0.0015% of P, less than or equal to 0.8% of Ni, less than or equal to 0.4% of Cr, less than or equal to 0.4% of Mo, and the balance of Fe and inevitable impurities; and mass percentages of C, Si, Mn, P, and S satisfy: a liquidus temperature T_{L}=1537-88[C]-8[Si]-5[Mn]-30[P]-25[S], a solidus temperature T_{S}=1536-415[C]-12[Si]-6.8[Mn]-125[P]-184[S], and 25°C≤T_{L}-T_{S}≤45°C.

C, as one of important elements in the steel wire rod of a welding wire, can reduce the average size of austenite grains, reduce proeutectoid ferrite, and increase acicular ferrite, thereby effectively improving the strength and hardness of weld metal, improving arc stability during welding, and improving a transient performance of a molten drop.

Si, as a main deoxidizing element and strengthening element in the steel wire rod of a welding wire, is mainly subjected to solution treatment in austenite and ferrite, thereby playing a solution treatment strengthening role, which can effectively improve the strength of a welded seam.

Mn, as a deoxidizing element in a welding process, forms an oxide in a deoxidizing process, which can improve the strength and toughness of the welded seam, and also can improve the content of the acicular ferrite in the weld metal, reduce the proeutectoid ferrite and ferrite side-plate, and refine the acicular ferrite at the same time.

S, with a content in a range of 0.013%-0.1%, can improve surface activity of the molten drop, and increase fluidity of the weld metal, thereby being conducive to forming the welded seam, and moreover avoiding a harmful effect on the toughness of the welded seam.

For P, as an impurity element in the steel wire rod of a welding wire, if the content thereof is too high, it will be easy to produce component segregation at a late stage of solidification of molten steel, being unfavorable to drawing of the steel wire rod, and also unfavorable to the low-temperature toughness of the welded seam.

Ni is an element for improving the strength and low-temperature impact toughness of the welded seam, and Ni can refine a structure to promote formation of the acicular ferrite, thereby playing an important strengthening role in the weld metal.

Cr can increase the content of the acicular ferrite in the welded seam, thereby improving the strength and low-temperature toughness of the welded seam.

Mo can lower a phase-transition temperature, inhibit generation of the proeutectoid ferrite, promote transformation of the acicular ferrite, and increase a proportion of the acicular ferrite, thereby being conducive to improving the strength and toughness.

In summary, the above elements and the weight percentage ranges thereof are reasonably set, which can ensure the strength and toughness of the weld metal and a smooth welding process. On the basis of reasonable design of the mass percentages of C, Si, Mn, P, Ni, Cr, and Mo, the content of S is controlled, which not only refines the molten drop in the welding process, so that a surface tension of the molten drop is reduced, thereby facilitating flow of a deposited metal, and improving the forming property of the welded seam, but also reduces cost of desulfurization in a steelmaking process. Further in combination with restrictions on the liquidus temperature and the solidus temperature of the welding wire, melting point and solidifying point intervals of the welding wire are controlled, so as to control a solidification speed of the weld metal, thereby making the weld metal have good fluidity and a weld pool solidify quickly, so that the problem that during all-position welding, the weld metal at the position corresponding to the position of twelve o'clock flows downwards and falls can be solved, and therefore during all-position welding, a surface of the welded seam is uniform and smooth, and the shape of a weld bead is attractive.

Preferably, mass percentages of C, Mn, Ni, Cr, and Mo satisfy: an austenite transformation start temperature Ar3=910-310[C]-80[Mn]-55[Ni]-15[Cr]-80[Mo]; and a bainite transformation start temperature Bs=830-270[C]-90[Mn]-37[Ni]-70[Cr]-83[Mo], and 30°C≤Ar3-Bs≤80°C. By way of the reasonable design of various elemental constituents and the content of each element, the austenite transformation start temperature and the bainite transformation start temperature are regulated and controlled, so as to ensure that sufficient ferrite exists in the weld metal, thereby reducing a residual stress and deformation of a welded joint, improving the welding forming property, preparing a welding wire with a stable arc during welding, and realizing that during all-position welding, the surface of the welded seam is uniform and smooth, and the shape of the weld bead is attractive.

In order to realize the above-described objective of the present invention, the present invention provides a welding wire for gas shielded arc welding, which is prepared from the above-described steel wire rod of a welding wire for gas shielded arc welding as a base material. The above-described steel wire rod of a welding wire for gas shielded arc welding is used as the base material to prepare the welding wire for gas shielded arc welding with the diameter of 1.2 mm by way of drawing. With Ar + 20% CO₂ used as shielding gas, a welding current of 220-230 A, and a welding voltage of 25 V, a fusion welding test is carried out. It is found that an excellent welding process performance is achieved, a tensile strength of the obtained weld metal is 770 MPa or above, an impact energy at -40°C is 98 J or above, and the shape of the welded seam is attractive.

In order to realize the above-described objective of the present invention, the present invention provides a production method for preparing the steel wire rod of a welding wire for gas shielded arc welding, including the following processes carried out in sequence:
molten steel smelting;
refining;
steel billet casting: casting molten steel obtained from refining into steel billet;
temperature-controlled heating: carrying out temperature-controlled heating on the obtained steel billet in a heating furnace;
temperature-controlled rolling: rolling the steel billet obtained from the temperature-controlled heating process into the steel wire rod after descaling with high-pressure water, where a descaling water pressure is greater than or equal to 18 MPa, an intermediate mill uses a machining rolling groove, the steel wire rod is centrally cooled after finishing rolling, and wire discharging is performed after cooling; and

Stelmor slow cooling: carrying out slow cooling on the steel wire rod obtained from the temperature-controlled rolling process on a Stelmor slow cooling line, where heat preservation covers and fan air vents are all closed, and a cooling speed of the steel wire rod in a phase-transition temperature interval is less than or equal to 0.8°C/s.

By way of temperature-controlled rolling, and control over the Stelmor slow cooling, oxide scale on a surface of the steel billet can be effectively removed, and residual oxide scale can be prevented from being pressed into a deep structure of the steel wire rod in a process of rolling into the steel wire rod. Moreover, by way of the machining rolling groove, surface flatness of the steel wire rod can be ensured, and the situation that since a surface of the rolling groove is rough, a defect on a surface of the steel wire rod increases can also be avoided, so that surface quality and structure and strength properties of the steel wire rod are ensured, thereby facilitating drawing.

According to the present invention, on the Stelmor slow cooling line, a total length of all the heat preservation covers is greater than 80 m, an inlet roller way speed of the Stelmor slow cooling line is less than or equal to 0.18 m/s, and an outlet roller way speed thereof is less than or equal to 0.40 m/s, so as to realize that the cooling speed of the steel wire rod in the phase-transition temperature interval is less than or equal to 0.8°C/s, prolong retention time in the phase-transition temperature interval, realize reasonable control over the thickness and structure of the oxide scale on the surface of the steel wire rod to improve a mechanical peeling performance of the oxide scale, and improve uniformity of an internal structure of the steel wire rod, thereby being conducive to drawing the steel wire rod into a welding wire.

According to the present invention, in the temperature-controlled rolling process, a rolling start temperature is 970-1000°C, an inlet temperature of a finishing mill is less than or equal to 880°C, and a wire discharging temperature is 880-910°C. Therefore, effective control over the thickness and structure of the oxide scale on the surface of the steel wire rod can be realized, so that the thickness of the oxide scale on the surface of the steel wire rod obtained is 10 µm or above, and the steel wire rod is made to have an excellent oxide scale peeling performance.

As a further improvement of an embodiment, in the refining process, the molten steel obtained from the molten steel smelting process is refined in an ladle furnace; during refining, deoxidization and desulfurization are carried out by making white slag, refining time is greater than or equal to 35 min, and time for making the white slag is greater than or equal to 15 min; the content of other alloys is adjusted to meet requirements of a target range before feeding a ferrotitanium wire; and soft stirring time in a later stage of refining is greater than or equal to 15 min. By way of control over timing for feeding the ferrotitanium wire, a burning loss of titanium in an early stage of refining is avoided, thereby improving a yield of a titanium element, optimizing chemical constituents of a final steel wire rod and effectively controlling production cost, and ensuring the structure and strength of the prepared steel wire rod, and the welding performance of the welding wire. Further by way of control over time during refining, uniformity of components in the molten steel can be improved, so as to reduce macro and micro segregation of the steel billet, and improve the structure and strength of the ultimately obtained steel wire rod, thereby facilitating drawing into the welding wire.

As a further improvement of an embodiment, in the steel billet casting process, the molten steel obtained from the refining process is cast with full protection, a degree of superheat of the molten steel is 18-35°C, casting billet is maintained at a constant casting speed, and the casting speed is 2.5-2.7 m/min. By controlling parameters in the casting process, homogenization of the molten steel can be improved, and component segregation of the steel billet is reduced, so that the structure and strength of the ultimately obtained steel wire rod and the welding wire can be enhanced, thereby improving the forming property of the welding wire.

According to the present invention, in the temperature-controlled heating process, a temperature of a heating zone is 960-1020°C, and a temperature of a soaking zone is 1080-1120°C.

As a further improvement of an embodiment, in the molten steel smelting process, smelting raw materials including molten iron and steel scrap are smelted in a converter, a weight percentage of the molten iron in the smelting raw materials is greater than 90%, and a ferrosilicon alloy, a silicomanganese alloy, a low-carbon ferromanganese alloy, and lime are sequentially added into the molten steel when tapping is performed by 1/3. In this way, a weight percentage of the molten iron and timing for adding the various alloys and the lime are controlled, so as to ensure a high degree of purity of constituents of the molten steel, and improve the structure and strength of the steel wire rod and the ultimately prepared welding wire, thereby being conducive to drawing the steel wire rod into the welding wire, and improving the welding performance of the welding wire.

Compared with the prior art, the present invention has the beneficial effects that according to the welding wire for gas shielded arc welding, and the steel wire rod of a welding wire for gas shielded arc welding and the production method therefor of the present invention, on the basis of reasonable design of the components and the mass percentages thereof, not only is cost of desulfurization in the steelmaking process reduced, but also the weld metal has good fluidity, the weld pool solidifies quickly, and the welded seam has a good forming property, thereby solving the problem that during all-position welding, the weld metal at the position corresponding to the position of twelve o'clock flows downwards and falls, so that during all-position welding, the surface of the welded seam is uniform and smooth, and the shape of the weld bead is attractive. Further by improving the uniformity and degree of purity of the components of the molten steel, reducing the macro and micro segregation of billet, and improving the depth of the defect on the surface of the steel wire rod, the uniformity of the structure and strength of the steel wire rod, the mechanical peeling performance of iron oxide scale, plasticity and the like, a tensile strength of the steel wire rod finally obtained using the production method can reach 650 MPa or above, a drawing property is excellent, and the steel wire rod can be drawn into the welding wire for gas shielded arc welding with the diameter of 1.2 mm. When the fusion welding test is carried out in the case where Ar + 20% CO₂ are used as shielding gas, the welding current is 220-230 A, and the welding voltage is 25 V, an excellent welding process performance is achieved, the tensile strength of the obtained weld metal is 770 MPa or above, the impact energy at -40°C is 98 J or above, and the shape of the welded seam is attractive.

### BRIEF DESCRIPTION OF THE DRAWINGS

FIG. 1 is a picture of a welded seam in an example of the present invention; and
FIG. 2 is a picture of a welded seam in a comparative example of the present invention.

### DETAILED DESCRIPTION

The present invention is defined by the independent claims. Advantageous embodiments are described in dependent claims.

The present invention provides a steel wire rod for the preparation of a welding wire for gas shielded arc welding, a welding wire for gas shielded arc welding, and a production method for a steel wire rod of a welding wire for gas shielded arc welding.

In the steel wire rod for the preparation of a welding wire for gas shielded arc welding of the present invention, chemical components of which include, in mass percentage, 0.03%-0.08% of C, 0.5%-1.0% of Si, 1.4%-1.8% of Mn, 0.013%-0.1% of S, less than or equal to 0.0015% of P, less than or equal to 0.8% of Ni, less than or equal to 0.4% of Cr, less than or equal to 0.4% of Mo, and the balance of Fe and inevitable impurities; and mass percentages of C, Si, Mn, P, and S satisfy: a liquidus temperature T_{L}=1537-88[C]-8[Si]-5[Mn]-30[P]-25[S], a solidus temperature T_{S}=1536-415[C]-12[Si]-6.8[Mn]-125[P]-184[S], and 25°C≤T_{L}-T_{S}≤45°C.

In the above-described formulae for the liquidus temperature T_{L} and the solidus temperature T_{S}, square brackets "[]" denote a mass percentage of an element therein, for example, [C] denotes a mass percentage of C, and so on for other elements.

Preferably, mass percentages of C, Mn, Ni, Cr, and Mo satisfy: an austenite transformation start temperature Ar3=910-310[C]-80[Mn]-55[Ni]-15[Cr]-80[Mo]; and a bainite transformation start temperature Bs=830-270[C]-90[Mn]-37[Ni]-70[Cr]-83[Mo], and 30°C≤Ar3-Bs≤80°C.

Similarly, in the above formulae for the austenite transformation start temperature Ar3 and the bainite transformation start temperature Bs, square brackets "[]" denote a mass percentage of an element therein, for example, [C] denotes a mass percentage of C, and so on for other elements.

The steel wire rod for the preparation of a welding wire for gas shielded arc welding can be used as a base material for producing the welding wire for gas shielded arc welding.

In another aspect, the present invention further provides a welding wire for gas shielded arc welding, and the welding wire for gas shielded arc welding is prepared from the steel wire rod of a welding wire for gas shielded arc welding as a base material. For example, the steel wire rod of a welding wire for gas shielded arc welding is subjected to a drawing process so as to prepare the welding wire for gas shielded arc welding, and the diameter of the welding wire for gas shielded arc welding is 1.2 mm. When a fusion welding test is carried out in the cases where Ar + 20% CO₂ are used as shielding gas, a welding current is 220-230 A, and a welding voltage is 25 V, an excellent welding process performance is achieved, a tensile strength of the obtained weld metal is 770 MPa or above, an impact energy at -40°C is 98 J or above, and the shape of a welded seam is attractive.

The present invention further provides a production method for preparing the steel wire rod of a welding wire for gas shielded arc welding, as described before, the production method of the present invention is obtained according to lots of experimental study, and various processes in the production method are further described below.

### (1) Molten steel smelting

Smelting raw materials including molten iron and steel scrap are smelted in a converter, and a weight percentage of the molten iron in the smelting raw materials is greater than 90%, so as to ensure a degree of purity of components of the molten steel. A ferrosilicon alloy, a silicomanganese alloy, a low-carbon ferromanganese alloy, and lime are sequentially added into the molten steel when tapping is performed by 1/3, so as to adjust the content of constituents in the molten steel and make slag, and effectively improve the degree of purity of the molten steel, thereby improving the structure and strength of the steel wire rod.

The steel scrap is preferably high-quality steel scrap such as head and tail billet which is cut waste during smelting of low-carbon steel, and of course, the steel scrap is not limited to this. By using the high-quality steel scrap with a higher degree of purity and fewer impurities, difficulty of impurity removal in subsequent processes can be reduced, and the molten steel can have a higher degree of purity.

### (2) Refining

The molten steel obtained from the molten steel smelting process is refined in an ladle furnace. During refining, deoxidization and desulfurization are carried out by making white slag, refining time is greater than or equal to 35 min, time for making white slag is greater than or equal to 15 min, and the content of other alloys is adjusted to meet requirements of a target range before feeding a ferrotitanium wire. Soft stirring time in a later stage of refining is greater than or equal to 15 min. By way of control over timing for feeding the ferrotitanium wire, a burning loss of titanium in an early stage of refining is avoided, thereby improving a yield of a titanium element, optimizing chemical constituents of a final steel wire rod and effectively controlling production cost. By way of control over time of various treatment during refining, homogenization of the molten steel can be greatly improved so as to reduce macro and micro segregation of the obtained steel billet, thereby improving the structure and strength of the ultimately obtained steel wire rod.

### (3) Steel billet casting

The molten steel obtained from the refining process is cast with full protection, where a degree of superheat of the molten steel is 18-35°C, casting billet is maintained at a constant casting speed, and the casting speed is 2.5-2.7 m/min; and steel billet with a cross-section size of 140 mm × 140 mm is obtained, and of course, the size of the steel billet is not limited to this. By controlling parameters such as the degree of superheat and the casting speed, homogenization of the molten steel can be greatly improved, and component segregation of the steel billet is reduced, so that the structure and strength of the ultimately obtained steel wire rod can be enhanced.

### (4) Temperature-controlled heating

Temperature-controlled heating is carried out on the obtained steel billet in a heating furnace, a temperature of a heating zone is 960-1020°C, and a temperature of a soaking zone is 1080-1120°C.

### (5) Temperature-controlled rolling

The steel billet obtained from the temperature-controlled heating process is rolled into the steel wire rod after descaling with high-pressure water, where chemical components of the steel wire rod include, in mass percentage, 0.03%-0.08% of C, 0.5%-1.0% of Si, 1.4%-1.8% of Mn, 0.013%-0.1% of S, less than or equal to 0.0015% of P, less than or equal to 0.8% of Ni, less than or equal to 0.4% of Cr, less than or equal to 0.4% of Mo, and the balance of Fe and inevitable impurities; and mass percentages of C, Si, Mn, P, and S satisfy: a liquidus temperature T_{L}=1537-88[C]-8[Si]-5[Mn]-30[P]-25[S], a solidus temperature T_{S}=1536-415[C]-12[Si]-6.8[Mn]-125[P]-184[S], and 25°C≤T_{L}-T_{S}≤45°C. Therefore, when the steel wire rod is drawn into the welding wire and the welding wire is used for welding, the strength and toughness of weld metal and a smooth welding process can be ensured. Not only can a molten drop in the welding process be refined, so that a surface tension of the molten drop is reduced, thereby facilitating flow of a deposited metal, and improving the forming property of the welded seam, but also cost of desulfurization in a steelmaking process is reduced. Further in combination with restrictions on the liquidus temperature and the solidus temperature of the welding wire, melting point and solidifying point intervals of the welding wire are controlled, so as to control a solidification speed of the weld metal, thereby making the weld metal have good fluidity and a weld pool solidify quickly, so that the problem that during all-position welding, the weld metal at the position corresponding to the position of twelve o'clock flows downwards and falls can be solved, and therefore during all-position welding, a surface of the welded seam is uniform and smooth, and the shape of a weld bead is attractive.

Preferably, in the chemical components of the steel wire rod, mass percentages of C, Mn, Ni, Cr, and Mo satisfy: an austenite transformation start temperature Ar3=910-310[C]-80[Mn]-55[Ni]-15[Cr]-80[Mo], and a bainite transformation start temperature Bs=830-270[C]-90[Mn]-37[Ni]-70[Cr]-83[Mo], and 30°C≤Ar3-Bs≤80°C. Therefore, it is ensured that sufficient ferrite exists in the weld metal, thereby reducing a residual stress and deformation of a welded joint, improving the welding forming property, preparing a welding wire with a stable arc during welding, and realizing that during all-position welding, the surface of the welded seam is uniform and smooth, and the shape of the weld bead is attractive.

A descaling water pressure is greater than or equal to 18 MPa, an intermediate mill uses a machining rolling groove, the steel wire rod is centrally cooled after finishing rolling, and wire discharging is performed after cooling. By way of control over the descaling water pressure, oxide scale on a surface of the steel billet can be effectively removed, and residual oxide scale can be prevented from being pressed into a deep structure of the steel wire rod in a process of rolling into the steel wire rod. The machining rolling groove is used, so that surface flatness of the steel wire rod can be ensured, and a defect on a surface of the steel wire rod caused by the fact that a surface of the rolling groove is rough can also be alleviated.

Preferably, when the steel billet is rolled after descaling with the high-pressure water, a rolling start temperature is 970-1000°C, an inlet temperature of a finishing mill is less than or equal to 880°C, and plasticity of the rolled steel wire rod can be improved by way of low-temperature rolling.

After the steel wire rod after finishing rolling is subjected to water cooling, wire discharging is performed, where a wire discharging temperature is 880-910°C, that is, water cooling is performed between a rolling mill and a wire discharging machine.

Specifically, in this embodiment, at least three water-cooling water tanks are sequentially provided between the rolling mill and the wire discharging machine. When the steel wire rod passes through the three water-cooling water tanks after leaving the rolling mill, only at most two water-cooling water tanks close to the wire discharging machine are opened, and the remaining water-cooling water tanks are closed. Of course, in other examples, the number of water-cooling water tanks used is not limited to this.

### (6) Stelmor slow cooling

Heat preservation and slow cooling is carried out on the steel wire rod obtained from the temperature-controlled rolling process on a Stelmor slow cooling line, where heat preservation covers and fan air vents are all closed, and a cooling speed of the steel wire rod in a phase-transition temperature interval is less than or equal to 0.8°C/s so as to prolong retention time of the steel wire rod in the phase-transition temperature interval, and realize reasonable control over the thickness and structure of oxide scale on the surface of the steel wire rod to improve a mechanical peeling performance of the oxide scale.

On the Stelmor slow cooling line, a total length of all the heat preservation covers is greater than 80 m, an inlet roller way speed of the Stelmor slow cooling line is less than or equal to 0.18 m/s, and an outlet roller way speed thereof is less than or equal to 0.40 m/s, so as to realize that a cooling speed of the steel wire rod in the phase-transition temperature interval is less than or equal to 0.8°C/s, and prolong the retention time in the phase-transition temperature interval, thereby reasonably controlling the thickness and structure of the oxide scale on the surface of the steel wire rod to facilitate peeling of the oxide scale, and improving uniformity of an internal structure of the steel wire rod, which is conducive to drawing the steel wire rod into a welding wire.

A specific embodiment of the present invention will be introduced below by way of five examples with specific serial numbers of 1-5 in combination with three comparative examples with serial numbers of 6-8.

### (1) Molten steel smelting

Smelting raw materials including molten iron and steel scrap are smelted in a 180 t converter, and a ferrosilicon alloy, a silicomanganese alloy, a low-carbon ferromanganese alloy, and lime are sequentially added into the molten steel when tapping is performed by 1/3. The mass percentage of S in each ladle of molten iron is 0.03%-0.18%. A total charge weight of the smelting raw materials, a weight percentage of the molten iron in the smelting raw materials, smelting time, a mass percentage of C during tapping, a tapping temperature and the like in the five examples and the three comparative examples are shown in Table 1.

**[Table 1]**

| Serial number | | Total charge weight | Ratio of the molten iron | Smelting time | Mass percentage of C during tapping | Tapping temperature |
|---|---|---|---|---|---|---|
| Example | 1 | 200 t | 91% | 34 min | 0.035% | 1655°C |
| | 2 | 202 t | 92% | 37 min | 0.035% | 1655°C |
| | 3 | 198 t | 91% | 35 min | 0.037% | 1657°C |
| | 4 | 200 t | 90% | 34 min | 0.035% | 1659°C |
| | 5 | 197 t | 91% | 34 min | 0.035% | 1655°C |
| Comparative example | 6 | 200 t | 91% | 36 min | 0.032% | 1658°C |
| | 7 | 197 t | 91% | 34 min | 0.036% | 1655°C |
| | 8 | 198 t | 93% | 33 min | 0.033% | 1654°C |

Head and tail billet which is cut waste from low-carbon steel is used as the steel scrap in the five examples, and common steel scrap is selected in the three comparative examples.

### (2) Refining

The molten steel obtained from the molten steel smelting process is refined in an ladle furnace. During refining, deoxidization and desulfurization are carried out by making white slag, and the content of other alloys is adjusted to meet requirements of a target range before feeding a ferrotitanium wire. Soft stirring is performed in a later stage of refining, and soft stirring is performed with that a slag surface is slightly stirred and the molten steel is not exposed as a standard.

Refining time, white slag making time, soft stirring time and a tapping temperature in the five examples and the three comparative examples are respectively as shown in Table 2.

**[Table 2]**

| Serial number | | Refining time | Time for making white slag | Soft stirring time | Tapping temperature |
|---|---|---|---|---|---|
| Example | 1 | 38 min | 15 min | 15 min | 1595°C |
| | 2 | 40 min | 16 min | 17 min | 1597°C |
| | 3 | 38 min | 15 min | 15 min | 1596°C |
| | 4 | 39 min | 16 min | 16 min | 1601°C |
| | 5 | 38 min | 15 min | 15 min | 1595°C |
| Comparative example | 6 | 38 min | 15 min | 15 min | 1597°C |
| | 7 | 38 min | 15 min | 15 min | 1595°C |
| | 8 | 38 min | 15 min | 15 min | 1594°C |

### (3) Steel billet casting

The molten steel obtained from the refining process is cast with full protection, i.e., argon sealing for ladle shroud, a tundish covering agent, and integrated nozzle full-protection argon sealing are used for casting, and casting billet is maintained at a constant casting speed during casting, and an electromagnetic stirring current of a crystallizer is controlled to be 350 A with a frequency of 4 Hz, and a tail end electromagnetic stirring current is controlled to be 480 A with a frequency of 10 Hz, and the casting billet is cast into square billet with a cross-section size of 140 mm × 140 mm. The degree of superheat of the molten steel and the casting speed in the five examples and the three comparative examples are shown in Table 3.

**[Table 3]**

| Serial number | | Degree of superheat of the molten steel | Casting speed |
|---|---|---|---|
| Example | 1 | 30°C | 2.5 m/min |
| | 2 | 32°C | 2.5 m/min |
| | 3 | 31°C | 2.6 m/min |
| | 4 | 33°C | 2.5 m/min |
| | 5 | 30°C | 2.4 m/min |
| Comparative example | 6 | 30°C | 2.5 m/min |
| | 7 | 31°C | 2.5 m/min |
| | 8 | 28°C | 2.5 m/min |

### (4) Temperature-controlled heating

Temperature-controlled heating is carried out on the obtained steel billet in a heating furnace. A temperature of a heating zone, a temperature of a soaking zone, an air-fuel ratio of the soaking zone, and heat preservation time in the five examples and the three comparative examples are shown in Table 4.

**[Table 4]**

| Serial number | | Temperature of a heating zone | Temperature of a soaking zone | Air-fuel ratio of the soaking zone | Heat preservation time |
|---|---|---|---|---|---|
| Example | 1 | 960-1020°C | 1080-1120°C | Less than 0.7 | 56 min |
| | 2 | 960-1020°C | 1080-1120°C | Less than 0.7 | 56 min |
| | 3 | 960-1020°C | 1080-1120°C | Less than 0.7 | 60 min |
| | 4 | 960-1020°C | 1080-1120°C | Less than 0.7 | 56 min |
| | 5 | 960-1020°C | 1080-1120°C | Less than 0.7 | 60 min |
| Comparative example | 6 | 960-1020°C | 1080-1120°C | Less than 0.7 | 56 min |
| | 7 | 960-1020°C | 1080-1120°C | Less than 0.7 | 60 min |
| | 8 | 960-1020°C | 1080-1120°C | Less than 0.7 | 60 min |

### (5) Temperature-controlled rolling

The steel billet obtained from the temperature-controlled heating process is rolled into the steel wire rod after descaling with high-pressure water. A descaling water pressure, an amount of steel passing through a tungsten carbide roller ring used in the last two passes of finishing rolling, a rolling start temperature, an inlet temperature of a finishing mill, and a wire discharging temperature in the five examples and the three comparative examples are shown in Table 5. In addition, three water tanks numbered 5#, 6# and 7# are provided in sequence from front to back between a finishing mill of the last pass and the wire discharging machine. Opening situations of the three water tanks in the five examples and the three comparative examples are also as shown in Table 5.

**[Table 5]**

| Serial number | | Descaling water pressure | Amount of steel passing | Rolling start temperature | Inlet temperature of a finishing mill | Wire discharging temperature | Opened water tank |
|---|---|---|---|---|---|---|---|
| Example | 1 | 20 MPa | 240 t | 970-1000°C | Less than or equal to 880°C | 900°C | 6#, 7# |
| | 2 | 20 MPa | 240 t | 970-1000°C | Less than or equal to 880°C | 899°C | 5#, 7# |
| | 3 | 20 MPa | 240 t | 970-1000°C | Less than or equal to 880°C | 900°C | 6#, 7# |
| | 4 | 20 MPa | 240 t | 970-1000°C | Less than or equal to 880°C | 898°C | 5#, 7# |
| | 5 | 20 MPa | 240 t | 970-1000°C | Less than or equal to 880°C | 903°C | 6# |
| Comparative example | 6 | 20 MPa | 240 t | 970-1000°C | Less than or equal to 880°C | 898°C | 5#, 7# |
| | 7 | 20 MPa | 240 t | 970-1000°C | Less than or equal to 880°C | 900°C | 6#, 7# |
| | 8 | 20 MPa | 240 t | 970-1000°C | Less than or equal to 880°C | 900°C | 6#, 7# |

### (6) Stelmor slow cooling

Heat preservation and slow cooling is carried out on the steel wire rod obtained from the temperature-controlled rolling process on a Stelmor slow cooling line, heat preservation covers and fan air vents are all closed, and a cooling speed of the steel wire rod in a phase-transition temperature interval is less than or equal to 0.8°C/s. A total length of all the heat preservation covers, an inlet roller way speed, an outlet roller way speed and the like of the Stelmor slow cooling line in the five examples and the three comparative examples are shown in Table 6.

A temperature of the steel wire rod in each heat preservation cover is measured by way of an infrared thermometer, so that the cooling speed of the steel wire rod in the phase-transition temperature interval is calculated accordingly. A cooling speed of a lap point and a cooling speed of a non-lap point are shown in Table 6, respectively. The lap point refers to areas adjacent to each other of the steel wire rod in adjacent circles, while the non-lap point refers to areas not in contact with each other of the steel wire rod in different circles.

**[Table 6]**

| Serial number | | Total length of heat preservation covers | Inlet roller way speed | Outlet roller way speed | Cooling speed of a lap point | Cooling speed of a non-lap point |
|---|---|---|---|---|---|---|
| Example | 1 | 100 m | 0.15 m/s | 0.30 m/s | 0.5°C/s | 0.7°C/s |
| | 2 | 100 m | 0.15 m/s | 0.30 m/s | 0.5°C/s | 0.8°C/s |
| | 3 | 100 m | 0.15 m/s | 0.30 m/s | 0.6°C/s | 0.7°C/s |
| | 4 | 100 m | 0.15 m/s | 0.30 m/s | 0.5°C/s | 0.7°C/s |
| | 5 | 100 m | 0.15 m/s | 0.30 m/s | 0.4°C/s | 0.8°C/s |
| Comparative example | 6 | 100 m | 0.15 m/s | 0.30 m/s | 0.5°C/s | 0.6°C/s |
| | 7 | 100 m | 0.15 m/s | 0.30 m/s | 0.5°C/s | 0.7°C/s |
| | 8 | 100 m | 0.15 m/s | 0.30 m/s | 0.5°C/s | 0.7°C/s |

The final steel wire rod product is made according to the above-described production method in the five examples and the three comparative examples, and the obtained steel wire rod is tested.

The chemical components of the finished steel wire rod and the mass percentages (numerical unit, %) of the chemical components are shown in Table 7. The chemical components of the steel wire rod in the five examples include, in mass percentage, 0.03%-0.08% of C, 0.5%-1.0% of Si, 1.4%-1.8% of Mn, 0.013%-0.1% of S, less than or equal to 0.0015% of P, less than or equal to 0.8% of Ni, less than or equal to 0.4% of Cr, less than or equal to 0.4% of Mo, and the balance of Fe and inevitable impurities; and the mass percentages of the chemical components also satisfy: a liquidus temperature T_{L}=1537-88[C]-8[Si]-5[Mn]-30[P]-25[S], a solidus temperature T_{S}=1536-415[C]-12[Si]-6.8[Mn]-125[P]-184[S], 25°C≤T_{L}-T_{S}≤45°C, and an austenite transformation start temperature Ar3=910-310[C]-80[Mn]-55[Ni]-15[Cr]-80[Mo]; and a bainite transformation start temperature Bs=830-270[C]-90[Mn]-37[Ni]-70[Cr]-83[Mo], and 30°C≤Ar3-Bs≤80°C.

**[Table 7]**

| Serial number | | C | Si | Mn | S | P | Ni | Cr | Mo |
|---|---|---|---|---|---|---|---|---|---|
| Example | 1 | 0.064 | 0.54 | 1.70 | 0.013 | 0.0013 | 1.78 | 0.25 | 0.32 |
| | 2 | 0.059 | 0.54 | 1.66 | 0.016 | 0.0015 | 1.83 | 0.23 | 0.21 |
| | 3 | 0.068 | 0.60 | 1.59 | 0.031 | 0.0014 | 1.72 | 0.24 | 0.19 |
| | 4 | 0.064 | 0.57 | 1.65 | 0.033 | 0.0013 | 1.52 | 0.2 | 0.22 |
| | 5 | 0.062 | 0.54 | 1.67 | 0.041 | 0.0013 | 2.60 | 0.2 | 0.23 |
| Comparative example | 6 | 0.064 | 0.54 | 1.7 | 0.013 | 0.0013 | 1.45 | 0.25 | 0.20 |
| | 7 | 0.056 | 0.50 | 1.42 | 0.003 | 0.0013 | 0.43 | 0.21 | 0.19 |
| | 8 | 0.054 | 0.50 | 1.80 | 0.005 | 0.0013 | 1.03 | 0.25 | 0.20 |

The structure and mechanical property of the steel wire rod are measured as shown in Table 8.

**[Table 8]**

| Serial number | | Maximum value of a tensile strength of the same circle /MPa | Minimum value of a tensile strength of the same circle/MPa | Strength difference of the same circle/MPa | Reduction of a cross section/% |
|---|---|---|---|---|---|
| Example | 1 | 781 | 735 | 46 | 75 |
| | 2 | 746 | 704 | 42 | 72 |
| | 3 | 766 | 717 | 49 | 73 |
| | 4 | 743 | 697 | 46 | 71 |
| | 5 | 807 | 761 | 46 | 73 |
| Comparative example | 6 | 747 | 694 | 53 | 72 |
| | 7 | 608 | 562 | 46 | 74 |
| | 8 | 697 | 650 | 47 | 72 |

### (7) Drawing

The steel wire rod obtained from the Stelmor slow cooling process is drawn into the welding wire with the diameter of 1.2 mm. The welding wire is applied in gas shielded arc welding, and when (Ar + 20% CO₂) are used as shielding gas for a fusion welding test, a welding current is 220-230 A, and a welding voltage is 25 V, the measured tensile strength of the weld metal and the impact energy at -40°C are shown in Table 9.

**[Table 9]**

| Serial number | | Tensile strength | Impact energy at -40°C |
|---|---|---|---|
| Example | 1 | 808 MPa | 98 J |
| | 2 | 775 MPa | 103 J |
| | 3 | 791 MPa | 107 J |
| | 4 | 770 MPa | 118 J |
| | 5 | 834 MPa | 122 J |
| Comparative example | 6 | 771 MPa | 81 J |
| | 7 | 635 MPa | 71 J |
| | 8 | 724 MPa | 76 J |

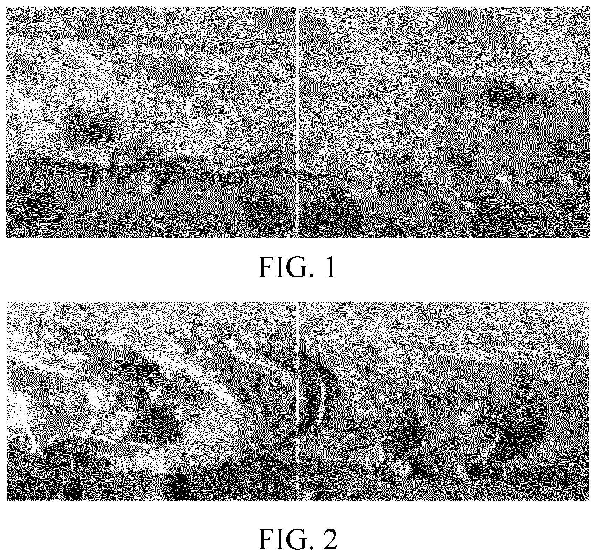

After implementation and verification, and in combination with FIG. 1, in which a picture of welded seams in some of Examples 1-5 are shown, it is found that: when the finished steel wire rod produced in Examples 1-5 by using the chemical constituents and production method described in this embodiment is drawn into the welding wire, an excellent welding process performance is achieved, and when the welding wire is used for full-position welding, the surface of the welded seam is uniform and smooth, and the shape of the weld bead is attractive. FIG. 2 shows a picture of welded seams in some examples of Comparative Examples 6-8, and it is found that: the content of some elements and key production process parameters in Comparative Examples 6-8 are not within the scope of this embodiment, when the steel wire rod is drawn into the welding wire, the welding process performance is poor, and when the welding wire is used for all-position welding, the surface of the welded seam is rough, and has an obvious dripping trace.

The above-described example only describes a specific embodiment of the present invention, but cannot therefore be understood as a limitation to the patent scope of the present invention.

## Claims

1. A steel wire rod for the preparation of a welding wire for gas shielded arc welding, chemical components of the steel wire rod comprising, in mass percentage, 0.03%-0.08% of C, 0.5%-1.0% of Si, 1.4%-1.8% of Mn, 0.013%-0.1% of S, less than or equal to 0.0015% of P, less than or equal to 0.8% of Ni, less than or equal to 0.4% of Cr, less than or equal to 0.4% of Mo, and the balance of Fe and inevitable impurities; and mass percentages of C, Si, Mn, P, and S satisfy: a liquidus temperature T_{L}=1537-88[C]-8[Si]-5[Mn]-30[P]-25[S], a solidus temperature T_{S}=1536-415[C]-12[Si]-6.8[Mn]-125[P]-184[S], and 25°C≤T_{L}-T_{S}≤45°C.

2. The steel wire rod of a welding wire for gas shielded arc welding according to claim 1, wherein mass percentages of C, Mn, Ni, Cr, and Mo satisfy: an austenite transformation start temperature Ar3=910-310[C]-80[Mn]-55[Ni]-15[Cr]-80[Mo]; and a bainite transformation start temperature B_{S}=830-270[C]-90[Mn]-37[Ni]-70[Cr]-83[Mo], and 30°C≤Ar3-Bs≤80°C.

3. A welding wire for gas shielded arc welding, wherein the welding wire for gas shielded arc welding is prepared from the steel wire rod of a welding wire for gas shielded arc welding according to claim 1 as a base material.

4. A production method for the steel wire rod of a welding wire for gas shielded arc welding according to claim 1, comprising the following processes performed in sequence:
molten steel smelting;
refining;
steel billet casting: casting molten steel obtained from refining into steel billet;
temperature-controlled heating: carrying out temperature-controlled heating on the obtained steel billet in a heating furnace;
temperature-controlled rolling: rolling the steel billet obtained from the temperature-controlled heating process into the steel wire rod after descaling with high-pressure water, wherein a descaling water pressure is greater than or equal to 18 MPa, an intermediate mill uses a machining rolling groove, the steel wire rod is centrally cooled after finishing rolling, and wire discharging is performed after cooling; and
Stelmor slow cooling: carrying out slow cooling on the steel wire rod obtained from the temperature-controlled rolling process on a Stelmor slow cooling line, wherein heat preservation covers and fan air vents are all closed, and a cooling speed of the steel wire rod in a phase-transition temperature interval is less than or equal to 0.8°C/s,
wherein on the Stelmor slow cooling line, a total length of all the heat preservation covers is greater than 80 m, an inlet roller way speed of the Stelmor slow cooling line is less than or equal to 0.18 m/s, and an outlet roller way speed thereof is less than or equal to 0.40 m/s,
wherein in the temperature-controlled rolling process, a rolling start temperature is 970-1000°C, an inlet temperature of a finishing mill is less than or equal to 880°C, and a wire discharging temperature is 880-910°C and
wherein in the temperature-controlled heating process, a temperature of a heating zone is 960-1020°C, and a temperature of a soaking zone is 1080-1120°C.

5. The production method for the steel wire rod of a welding wire for gas shielded arc welding according to claim 4, wherein in the refining process, the molten steel obtained from the molten steel smelting process is refined in an ladle furnace; during refining, deoxidization and desulfurization are carried out by making white slag, refining time is greater than or equal to 35 min, and time for making the white slag is greater than or equal to 15 min; the content of other alloys is adjusted to meet requirements of a target range before feeding a ferrotitanium wire; and soft stirring time in a later stage of refining is greater than or equal to 15 min.

6. The production method for the steel wire rod of a welding wire for gas shielded arc welding according to claim 4, wherein in the steel billet casting process, the molten steel obtained from the refining process is cast with full protection, a degree of superheat of the molten steel is 18-35°C, casting billet is maintained at a constant casting speed, and the casting speed is 2.5-2.7 m/min.

7. The production method for the steel wire rod of a welding wire for gas shielded arc welding according to claim 4, wherein in the molten steel smelting process, smelting raw materials comprising molten iron and steel scrap are smelted in a converter, a weight percentage of the molten iron in the smelting raw materials is greater than 90%, and a ferrosilicon alloy, a silicomanganese alloy, a low-carbon ferromanganese alloy, and lime are sequentially added into the molten steel when tapping is performed by 1/3.

## Patentansprüche

1. Ein Stahldraht zur Herstellung eines Schweißdrahtes für das Schutzgasschweißen, wobei die chemischen Bestandteile des Stahldrahtes in Massenprozent sind 0,03 % bis 0,08 % C, 0,5 % bis 1,0 % Si, 1,4 % bis 1,8 % Mn, 0,013 % bis 0,1 % S, weniger als oder gleich 0,0015 % P, weniger als oder gleich 0,8 % Ni, weniger als oder gleich 0,4 % Cr, weniger als oder gleich 0,4 % Mo und der Rest Fe und unvermeidbare Verunreinigungen; und Massenanteile von C, Si, Mn, P und S erfüllen: eine Liquidustemperatur T_{L} =1537-88[C]-8[Si]-5[Mn]-30[P]-25[S], eine Solidustemperatur Ts =1536-415[C]-12[Si]-6,8[Mn]-125[P]-184[S] und 25°C≤T_{L} -T_{S} ≤45°C.

2. Stahldrahtstange eines Schweißdrahtes für das Schutzgasschweißen gemäß Anspruch 1, wobei die Massenanteile von C, Mn, Ni, Cr und Mo folgende Bedingungen erfüllen: eine Austenit-Umwandlungsstarttemperatur Ar3=910-310[C]-80[Mn]-55[Ni]-15[Cr]-80[Mo]; und eine Bainit-Umwandlungsstarttemperatur Bs=830-270[C]-90[Mn]-37[Ni]-70[Cr]-83[Mo], und 30 °C ≤ Ar3-Bs ≤ 80 °C.

3. Schweißdraht für das Schutzgasschweißen, wobei der Schweißdraht für das Schutzgasschweißen aus dem Walzdraht eines Schweißdrahtes für das Schutzgasschweißen gemäß Anspruch 1 als Grundmaterial hergestellt wird.

4. Verfahren zur Herstellung des Stahldrahtes eines Schweißdrahtes für das Schutzgasschweißen gemäß Anspruch 1, umfassend die folgenden nacheinander durchgeführten Prozesse:
Schmelzen von Stahl;
Raffinieren;
Gießen von Stahlknüppeln: Gießen von geschmolzenem Stahl, der durch Raffinieren gewonnen wurde, zu Stahlknüppeln;
temperaturgesteuertes Erhitzen: Durchführen eines temperaturgesteuerten Erhitzens des erhaltenen Stahlknüppels in einem Heizofen;
temperaturgesteuertes Walzen: Walzen des durch den temperaturgesteuerten Erhitzungsprozess erhaltenen Stahlknüppels zu Stahldraht nach dem Entzundern mit Hochdruckwasser, wobei der Entzunderungswasserdruck größer oder gleich 18 MPa ist, eine Zwischenwalzmaschine eine Bearbeitungswalzrille verwendet, der Stahldraht nach dem Fertigwalzen zentral gekühlt wird und das Drahtabziehen nach dem Kühlen durchgeführt wird; und
Stelmor-Langsamkühlung: Durchführung einer Langsamkühlung des aus dem temperaturgesteuerten Walzprozess gewonnenen Stahldrahtes auf einer Stelmor-Langsamkühlungslinie, wobei die Wärmeschutzabdeckungen und Lüftungsöffnungen geschlossen sind und die Kühlgeschwindigkeit des Stahldrahtes in einem Phasenübergangstemperaturbereich kleiner oder gleich 0,8 °C/s ist,
wobei auf der Stelmor-Langsamkühlungslinie die Gesamtlänge aller Wärmeschutzabdeckungen größer als 80 m ist, die Einlaufrollengeschwindigkeit der Stelmor-Langsamkühlungslinie kleiner oder gleich 0,18 m/s ist und die Auslaufrollengeschwindigkeit kleiner oder gleich 0,40 m/s ist,
wobei im temperaturgesteuerten Walzprozess die Walzstarttemperatur 970-1000 °C beträgt, die Einlauftemperatur eines Fertigwalzwerks kleiner oder gleich 880 °C ist und die Drahtabgabetemperatur 880-910 °C beträgt, und
wobei in dem temperaturgesteuerten Erhitzungsprozess eine Temperatur einer Erhitzungszone 960-1020 °C beträgt und eine Temperatur einer Haltezone 1080-1120 °C beträgt.

5. Verfahren zur Herstellung von Walzdraht für Schweißdraht für das Schutzgasschweißen gemäß Anspruch 4, wobei im Veredelungsprozess der aus dem Stahlschmelzprozess erhaltene geschmolzene Stahl in einem Pfannenofen veredelt wird; während der Veredelung werden die Desoxidation und Entschwefelung durch die Bildung von weißer Schlacke durchgeführt, die Veredelungszeit beträgt mindestens 35 Minuten und die Zeit für die Bildung der weißen Schlacke beträgt mindestens 15 Minuten; der Gehalt an anderen Legierungen wird so eingestellt, dass er den Anforderungen eines Zielbereichs entspricht, bevor ein Ferrotitan-Draht zugeführt wird; und die Zeit für das sanfte Rühren in einer späteren Phase der Veredelung beträgt mindestens 15 Minuten.

6. Verfahren zur Herstellung von Walzdraht für Schweißdraht zum Schutzgasschweißen gemäß Anspruch 4, wobei beim Gießen von Stahlknüppeln der aus dem Raffinationsprozess gewonnene geschmolzene Stahl unter vollständigem Schutz gegossen wird, der Überhitzungsgrad des geschmolzenen Stahls 18 bis 35 °C beträgt, der Knüppel mit konstanter Gießgeschwindigkeit gegossen wird und die Gießgeschwindigkeit 2,5 bis 2,7 m/min beträgt.

7. Verfahren zur Herstellung von Walzdraht für Schweißdraht zum Schutzgasschweißen gemäß Anspruch 4, wobei beim Schmelzen des geschmolzenen Stahls die Schmelzrohstoffe, bestehend aus geschmolzenem Eisen und Stahlschrott, in einem Konverter geschmolzen werden, der Gewichtsanteil des geschmolzenen Eisens in den Schmelzrohstoffen größer als 90 % ist und eine Ferrosiliciumlegierung, eine Siliciummanganlegierung, eine kohlenstoffarme Ferromanganlegierung und Kalk nacheinander in den geschmolzenen Stahl gegeben werden, wenn 1/3 des geschmolzenen Stahls abgegossen wird.

## Revendications

1. Tige de fil d'acier pour la préparation d'un fil de soudage pour soudage à l'arc protégé par gaz, les composants chimiques de la tige de fil d'acier comprenant, en pourcentage massique, 0,03 % - 0,08 % de C, 0,5 % - 1,0 % de Si, 1,4 % - 1,8 % de Mn, 0,013 % - 0,1 % de S, inférieurs ou égaux à 0,0015 % de P, inférieurs ou égaux à 0,8 % de Ni, inférieurs ou égaux à 0,4 % de Cr, inférieurs ou égaux à 0,4 % de Mo, et le solde de Fe et d'inévitables impuretés ; et les pourcentages massiques de C, Si, Mn, P et S satisfont : une température de liquidus T_{L} = 1537 - 88 [C] - 8 [Si] - 5 [Mn] - 30 [P] - 25 [S], une température de solidus T_{S} = 1536 - 415 [C] - 12 [Si] - 6,8 [Mn] - 125 [P] - 184 [S], et 25 °C ≤ T_{L} - T_{S} ≤ 45 °C.

2. La tige de fil d'acier d'un fil de soudage pour soudage à l'arc protégé par gaz selon la revendication 1, dans laquelle les pourcentages massiques de C, Mn, Ni, Cr et Mo satisfont : une température de départ de transformation austénite Ar3 = 910 - 310 [C] - 80 [Mn] - 55 [Ni] - 15 [Cr] - 80 [Mo] ; et une température de départ de transformation de bainite B_{S} = 830 - 270 [C] - 90 [Mn] - 37 [Ni] - 70 [Cr] - 83 [Mo], et 30 °C ≤ Ar3 - B_{S} ≤ 80 °C.

3. Fil de soudage pour soudage à l'arc protégé par gaz, dans lequel le fil de soudage pour le soudage à l'arc protégé par gaz est préparé à partir de la tige de fil d'acier d'un fil de soudage pour le soudage à l'arc protégé par gaz selon la revendication 1 comme matériau de base.

4. Méthode de production pour la tige de fil d'acier d'un fil de soudage pour soudage à l'arc protégé par gaz selon la revendication 1, comprenant les procédés suivants, effectués en séquence :
fusionner de l'acier ;
raffiner ;
coulée de billettes d'acier : couler de l'acier fondu obtenu par raffinage en billette d'acier ;
chauffage à température contrôlée : réalisation de chauffage à température contrôlée sur la billette d'acier obtenue dans un four de chauffage ;
laminage à température contrôlée : laminer la billette d'acier obtenue par le procédé de chauffage à température contrôlée en la tige de fil d'acier après détartrage avec de l'eau à haute pression, dans lequel une pression d'eau de détartrage est supérieure ou égale à 18 MPa, un laminoir intermédiaire utilise une rainure de laminage d'usinage, la tige de fil d'acier est refroidie centralement après le laminage terminé, et le déchargement du fil est effectué après le refroidissement ; et
refroidissement lent Stelmor : réalisation de refroidissement lent sur la tige de fil d'acier obtenue par le procédé de laminage à température contrôlée sur une conduite de refroidissement lent Stelmor, dans laquelle des couvercles de conservation de chaleur et des bouches d'aération de ventilateur sont tous fermés, et une vitesse de refroidissement de la tige de fil d'acier à un intervalle de température de transition de phase est inférieure ou égale à 0,8 °C/s,
dans lequel, sur la conduite de refroidissement lent Stelmor, une longueur totale de tous les couvercles de conservation de chaleur est supérieure à 80 m, une vitesse de chemin de laminage d'entrée de la conduite de refroidissement lent Stelmor est inférieure ou égale à 0,18 m/s, et une vitesse de chemin de laminage de sortie est inférieure ou égale à 0,40 m/s,
dans lequel, dans le procédé de laminage à température contrôlée, une température de départ de laminage est de 970 - 1000 °C, une température d'entrée d'un laminoir de finition est inférieure ou égale à 880 °C, et une température de décharge de fil est de 880 - 910 °C, et
dans lequel, dans le procédé de chauffage à température contrôlée, une température d'une zone de chauffage est de 960 - 1020 °C, et une température d'une zone de trempage est de 1080 - 1120 °C.

5. La méthode de production pour la tige de fil d'acier d'un fil de soudage pour le soudage à l'arc protégé par gaz selon la revendication 4, dans laquelle, dans le procédé de raffinage, l'acier fondu obtenu par le procédé de fonte d'acier fondu est raffiné dans un four à louches ; pendant le raffinage, la désoxydation et la désulfuration sont réalisées en faisant du scorie blanc, le temps de raffinage est supérieur ou égal à 35 minutes, et le temps pour faire du scorie blanc est supérieur ou égal à 15 minutes ; la teneur d'autres alliages est ajustée pour répondre aux exigences d'une plage cible avant d'alimenter un fil de ferrotitane ; et le temps de brassage doux à une étape ultérieure du raffinage est supérieur ou égal à 15 minutes.

6. La méthode de production pour la tige de fil d'acier d'un fil de soudage pour le soudage à l'arc protégé par gaz selon la revendication 4, dans laquelle, dans le procédé de coulée de billettes d'acier, l'acier fondu obtenu à partir du procédé de raffinage est coulé avec une protection complète, un degré de surchauffe de l'acier fondu est de 18 à 35 °C, la billette de coulée est maintenue à une vitesse de coulée constante, et la vitesse de coulée est de 2,5 - 2,7 m/min.

7. La méthode de production pour la tige de fil d'acier d'un fil de soudage pour le soudage à l'arc protégé par gaz selon la revendication 4, dans laquelle, dans le procédé de fonte d'acier fondu, des matières premières de fonte, comprenant du fer fondu et de la ferraille d'acier, sont fusionnées dans un convertisseur, un pourcentage de poids du fer fondu dans les matières premières de fonte est supérieur à 90 %, et un alliage de ferrosilicium, un alliage silicomanganèse, un alliage de ferromanganèse à faible teneur en carbone et de la chaux sont ajoutés séquentiellement à l'acier fondu lorsque du taraudage est effectué par un 1/3.
